# EUROPÄISCHE PATENTSCHRIFT

(11) **EP 2 377 185 B1**
(45) Veröffentlichungstag und Bekanntmachung des Hinweises auf die Patenterteilung: **29.04.2015**
(21) Anmeldenummer: 09768499.7
(22) Anmeldetag: 05.12.2009
(51) Int. Cl.: H01M 2/16, B32B 27/32, B32B 27/20, B32B 27/08, H01M 10/0525

(54) **MEHRSCHICHTIGE MIKROPORÖSE FOLIE FÜR BATTERIEN MIT ABSCHALTFUNKTION**
MULTI-LAYER MICROPOROUS FILM FOR BATTERIES HAVING SHUT-OFF FUNCTION
FEUILLE MICROPOREUSE MULTICOUCHE À FONCTION D'ARRÊT POUR BATTERIES

(30) Priorität: 12.12.2008 DE 102008061748
(43) Veröffentlichungstag der Anmeldung: 19.10.2011
(73) Patentinhaber: Treofan Germany GmbH & Co. KG, 66539 Neunkirchen (DE)
(72) Erfinder: SCHMITZ, Bertam, F-57200 Saareguemines (FR); BUSCH, Detlef, 66740 Saarlouis (DE)
(74) Vertreter: Kremer, Viola
(86) Internationale Anmeldenummer: PCT/EP2009/008704
(87) Internationale Veröffentlichungsnummer: WO 2010/066389

(56) Entgegenhaltungen:
- EP-A1- 0 668 156
- WO-A1-2006/040057
- US-A- 5 691 077
- ARORA P ET AL: "Battery Separators" CHEMICAL REVIEWS, ACS,WASHINGTON, DC, US, Bd. 104, Nr. 10, 1. Januar 2004 (2004-01-01), Seiten 4419-4462, XP002551107 ISSN: 0009-2665 [gefunden am 2004-10-13]

## Beschreibung

Die vorliegende Erfindung betrifft eine mehrschichtige mikroporöse Folie und ihre Verwendung als Separator.

Moderne Geräte erfordern eine Energiequelle, wie Batterien oder Akkus, die eine räumlich unabhängige Nutzung ermöglichen. Batterien haben den Nachteil, daß man sie entsorgen muß. Daher werden vermehrt Akkumulatoren (sekundäre Batterien) eingesetzt, die man mit Hilfe von Ladegeräten am Stromnetz immer wieder aufladen kann. Nickel-Cadmium-Akkus (NiCd-Akkus) können beispielsweise bei sachgerechtem Gebrauch eine Lebensdauer von ca. 1000 Ladezyklen erreichen.

Batterien und Akkus bestehen immer aus zwei Elektroden, die in eine Elektrolytlösung eintauchen und einem Separator, der Anode und Kathode trennt. Die verschiedenen Akkutypen unterscheiden sich durch das verwendete Elektrodenmaterial, den Elektrolyten und den verwendeten Separator. Ein Batterieseparator hat die Aufgabe Kathode und Anode in Batterien, beziehungsweise negative und positive Elektrode in Akkumulatoren, räumlich zu trennen. Der Separator muß eine Barriere sein, welche die beiden Elektroden elektrisch voneinander isoliert, um interne Kurzschlüsse zu vermeiden. Gleichzeitig muß der Separator jedoch durchlässig für Ionen sein, damit die elektrochemischen Reaktionen in der Zelle ablaufen können.

Ein Batterieseparator muß dünn sein, damit der Innenwiderstand möglichst gering ist und eine hohe Packungsdichte erzielt werden kann. Nur so sind gute Leistungsdaten und hohe Kapazitäten möglich. Zusätzlich ist es erforderlich, daß die Separatoren den Elektrolyten aufsaugen und bei gefüllten Zellen den Gasaustausch gewährleisten. Während früher u. a. Gewebe verwendet wurden, sind heutzutage überwiegend feinporige Materialien, wie Vliesstoffe und Membranen, im Einsatz.

In Lithium-Batterien ist das Auftreten von Kurzschlüssen ein Problem. Bei thermischer Belastung kann es in den Lithium-Ionen-Batterien zu einem Schmelzen des Batterieseparators und damit zu einem Kurzschluss mit verheerenden Folgen kommen. Ähnliche Gefahren bestehen, wenn die Lithium-Batterien mechanisch beschädigt oder durch mangelhafte Elektronik der Ladegeräte überladen werden.

Um die Sicherheit der Lithium-Ionen-Batterien zu erhöhen, wurden in der Vergangenheit Abschalt-Separatoren entwickelt (Shut Down Membranen). Diese speziellen Separatoren schließen ihre Poren in kürzester Zeit bei einer bestimmten Temperatur, die deutlich unterhalb des Schmelzpunktes oder des Zündpunktes von Lithium liegt. Damit werden die katastrophalen Folgen eines Kurzschlusses bei den Lithium-Batterien weitgehend verhindert.

Gleichzeitig ist jedoch für die Separatoren auch eine hohe mechanische Festigkeit gewünscht, welche durch Materialien mit hohen Schmelzetemperaturen gewährleistet wird. So sind beispielsweise Polypropylen-Membranen auf Grund der guten Durchstoßfestigkeit vorteilhaft, aber der Schmelzpunkt des Polypropylens liegt mit ca. 164°C sehr nahe am Flammpunkt des Lithiums (170°C).

Es ist im Stand der Technik bekannt Polypropylenmembranen mit weiteren Schichten zu kombinieren, die aus Materialien mit niedrigerem Schmelzpunkt aufgebaut sind, beispielsweise aus Polyethylen. Derartige Modifikationen der Separatoren dürfen natürlich die sonstigen Eigenschaften, wie Porosität, nicht nachteilig beeinflussen und die Ionenmigration nicht behindern. Der Einbau von Polyethylen-Schichten beeinflußt die Durchlässigkeit und die mechanische Festigkeit des Separators insgesamt jedoch sehr negativ. Zusätzlich ist die Haftung der Polyethylenschichten auf Polypropylen problematisch, so daß diese Schichten nur durch Laminierung kombiniert werden können oder nur ausgewählte Polymere dieser beiden Klassen coextrudiert werden können.

Im Stand der Technik sind im wesentlichen vier verschiedene Verfahren bekannt nach denen Folien mit hohen Porositäten hergestellt werden können: Füllstoffverfahren; Kaltverstreckung, Extraktionsverfahren und ß-Kristallitverfahren. Diese Verfahren unterscheiden sich grundsätzlich durch die verschiedenen Mechanismen, durch welche die Poren erzeugt werden.

Beispielsweise können durch den Zusatz von sehr hohen Füllstoffmengen poröse Folien hergestellt werden. Die Poren entstehen beim Verstrecken durch die Unverträglichkeit der Füllstoffe mit der Polymermatrix. In vielen Anwendungen bringen die großen Füllstoffmengen von bis zu 40 Gew.-% unerwünschte Nebenwirkungen mit sich. Beispielsweise ist die mechanische Festigkeit dieser porösen Folien trotz Verstreckung durch die hohen Füllstoffmengen beeinträchtigt. Außerdem ist die Porengrößenverteilung sehr breit, weshalb diese porösen Folien für Lithium-Ionen Batterien grundsätzlich nicht geeignet sind.

In den sogenannten Extraktionsverfahren werden die Poren im Prinzip durch Herauslösen einer Komponente aus der Polymermatrix durch geeignete Lösemittel erzeugt. Hier haben sich vielfältige Varianten entwickelt, die sich durch Art der Zusatzstoffe und die geeigneten Lösemittel unterscheiden. Es könne sowohl organische als auch anorganische Zusatzstoffe extrahiert werden. Diese Extraktion kann als letzter Verfahrensschritt bei der Herstellung der Folie erfolgen oder mit einer anschließenden Verstreckung kombiniert werden.

Ein älteres aber in der Praxis erfolgreiches Verfahren beruht auf einer Verstreckung der Polymermatrix bei sehr niedrigen Temperaturen (Kaltverstreckung). Hierzu wird die Folie zunächst in üblicher Weise extrudiert und anschließend zur Erhöhung des kristallinen Anteils für einige Stunden getempert. Im nächsten Verfahrensschritt erfolgt die Kalt-Verstreckung in Längsrichtung bei sehr niedrigen Temperaturen, um eine Vielzahl von Fehlstellen in Form kleinster Mikrorisse zu erzeugen. Diese vorgestreckte Folie mit Fehlstellen wird anschließend bei erhöhten Temperaturen mit höheren Faktoren nochmals in die gleiche Richtung verstreckt, wobei die Fehlstellen zu Poren vergrößert werden, die eine netzwerkartige Struktur ausbilden. Diese Folien vereinen hohe Porositäten und gute mechanische Festigkeiten in Richtung ihrer Verstreckung, im allgemeinen die Längsrichtung. Die mechanische Festigkeit in Querrichtung bleibt dabei jedoch mangelhaft, wodurch die Durchstoßfestigkeit schlecht ist und eine hohe Spleißneigung in Längsrichtung entsteht. Insgesamt ist das Verfahren kostenintensiv.

Ein weiteres bekanntes Verfahren zur Herstellung von porösen Folien basiert auf der Zumischung von ß-Nukleierungsmitteln zu Polypropylen. Durch das ß-Nukleierungsmittel bildet das Polypropylen beim Abkühlen der Schmelze sogenannte ß-Kristallite in hohen Konzentrationen. Bei der anschließenden Längs-Verstreckung erfolgt eine Umwandlung der ß-Phase in die alpha-Modifikation des Polypropylens. Da, sich diese unterschiedlichen Kristallformen in der Dichte unterscheiden, entstehen auch hier zunächst viele mikroskopische Fehlstellen, die durch die Verstreckung zu Poren aufgerissen werden. Die nach diesem Verfahren hergestellten Folien haben hohe Porositäten und gute mechanische Festigkeiten in Längs- und Querrichtung und eine sehr gute Wirtschaftlichkeit. Diese Folien werden nachstehend ß-poröse Folien genannt.

Es ist bekannt, daß poröse Folien, die nach dem Extraktionsverfahren hergestellt werden, durch den Zusatz einer niedrig-schmelzenden Komponente mit einer Abschaltfunktion versehen werden können. Da bei diesem Verfahren zuerst die Orientierung erfolgt und die Poren anschließend durch Extraktion an der orientierten Folie erzeugt werden, kann die niedrig-schmelzende Komponente die Bildung der Poren nicht beeinträchtigen. Membranen mit Abschaltfunktion werden daher häufig nach diesem Verfahren hergestellt.

Auch bei dem Kaltstreckverfahren können niedrig-schmelzende Komponenten für eine Abschaltfunktion zugesetzt werden. Der erste Streckschritt muß ohnehin bei sehr niedrigen Temperaturen durchgeführt werden, um die Mikrorisse überhaupt zu erzeugen. Der zweite Orientierungsschritt wird im allgemeinen in die gleiche Richtung, meist MD, durchgeführt und kann daher auch bei vergleichsweise niedriger Temperatur erfolgen, da keine Umorientierung der Molekülketten erfolgt. Die mechanischen Eigenschaften dieser Folien sind insbesondere in Querrichtung mangelhaft.

Als Alternative wurden Verfahren entwickelt nach denen zunächst verschiedene einschichtige Folien mit unterschiedlichen Funktionen separat hergestellt und anschließend zu einer Membran mit Abschaltfunktion zusammengefügt, d.h. laminiert werden. Hier ist es möglich jede Schicht hinsichtlich der gewünschten Funktion zu optimieren, ohne daß die Abschaltfunktion die Porosität der Membran beeinträchtigen könnte. Diese Verfahren sind natürlich sehr kostenintensiv und technisch aufwendig.

Membranen aus ß-porösen Folien haben den Nachteil, daß sie bisher nur über eine derartige Laminierung mit einer entsprechenden mit Abschaltfunktion versehen werden können. Um über ß-Kristallite und anschließende biaxiale Verstreckung ausreichende Porositäten und die gewünschten mechanischen Festigkeiten zu erzeugen, muß nach der Orientierung in Längsrichtung eine anschließende Querverstreckung der Folie erfolgen. Die Querverstreckung einer bereits in Längsrichtung orientierten Folie bedeutet de facto eine Umorientierung der Polymermoleküle und setzt eine wesentlich höhere Mobilität der Polymerketten voraus, als es bei der ersten Orientierung der unverstreckten Polymeren in Längsrichtung erforderlich ist. Daher ist bei der Querverstreckung einer bereits längsorientierten Polypropylenfolie eine hohe Temperatur erforderlich, die über der gewünschten Abschalttemperatur liegt.

Im Rahmen der Versuche zu der vorliegenden Erfindung wurde daher erwartet, daß die durch Längs- und Querverstreckung erzeugten Poren bereits bei der Querverstreckung gleichzeitig durch eine niedrig-schmelzende Komponente in der Abschaltschicht wieder so verschlossen werden, daß die Porosität erheblich beeinträchtigt wird. Einer Absenkung der Querstrecktemperatur sind mechanische Grenzen gesetzt, da daß längsverstreckte Polypropylen nur bei Temperaturen von mindesten 145°C querverstreckt werden kann und im allgemeinen bei Temperaturen von 150 bis 160°C quergestreckt wird. Es ist daher - außer der Laminierung - im Stand der Technik kein Verfahren bekannt nach dem ß-poröse Folien mit einer Abschaltfunktion versehen werden können.

WO 03/091316 A1 betrifft die Verwendung einer biaxial orientierten mikroporösen Folie, die ein Propylenpolymer und mindestens ein β-Nukleierungsmittel enthält und deren Mikroporosität durch Umwandlung von β-kristallinem Polypropylen beim Verstrecken der Folie erzeugt wird, zur Etikettierung von Behältnissen beim Blasformen.

Dabei soll die Folie dieser Druckschrift ein Propylenhomopolymer und/oder Propylen-Blockcopolymer umfassen und kann zusätzlich andere Polyolefine, wie Polyethylene, enthalten.

WO 2006/040057 betrifft die Verwendung einer biaxial orientierten Folie mit einer mikroporösen Schicht, die ein Propylenpolymeres und mindestens ein [beta]-Nukleierungsmittel enthält und deren Mikroporosität durch Umwandlung von [beta]-kristallinem Polypropylen beim Verstrecken der Folie erzeugt wird, zur Etikettierung von Behältnissen beim Tiefziehen. Jedoch ist diesen Druckschriften keine Folie zu entnehmen, die eine poröse Schicht umfasst, die Polypropylenhomopolymer und Polypropylencopolymer und β-Nukleierungsmittel enthält.

EP 0 668 156 A1 offenbart einen porösen Film als Separator für Batterien, der Polyethylen und Polypropylen enthält. Allerdings wird dieser Film nicht durch Umwandlung von β-kristallinem Polypropylen beim Verstrecken der Folie erhalten. Weiterhin wird auch kein Zusatz von einem Blockcopolymer beschrieben. Angaben zum Gurley Wert des Films vor und nach der erfindungsgemäßen Temperaturbehandlung sowie zum E-Modul in Längs- und Querrichtung sind dieser Druckschrift ebenfalls nicht zu entnehmen.

Die Aufgabe der vorliegenden Erfindung bestand darin, eine poröse Folie, bzw. einen Separator für Batterien zur Verfügung zu stellen, welche/r eine Abschaltfunktion, hohe Porositäten und hervorragende mechanische Festigkeit aufweisen soll. Des weiteren soll die Membran durch einfache, umweltschonende und kostengünstige Verfahren herstellbar sein.

Die der Erfindung zugrundeliegende Aufgabe wird gelöst durch eine biaxial orientierte, mehrschichtige mikroporöse Folie mit Abschaltfunktion, deren Mikroporosität durch Umwandlung von β-kristallinem Polypropylen beim Verstrecken der Folie erzeugt wird, welche mindestens eine Abschaltschicht I und mindestens eine poröse Schicht II umfasst, wobei die Abschaltschicht Propylenhomopolymer und Propylen-Blockcopolymer und β-Nukleierungsmittel und Polyethylen enthält und die poröse Schicht II Propylenhomopolymer und Propylen-Blockcopolymer und β-Nukleierungsmittel enthält und wobei die Folie einen Gurley Wert von 50 bis 5000s, einen E-Modul in Längsrichtung von >300 N/mm² und in Querrichtung von > 500 N/mm² aufweist und die Folie, nach dem sie fünf Minuten einer Temperatur von 130°C ausgesetzt wurde, einen Gurley Wert von mindestens 5000s aufweist, wobei der Gurley Wert nach dieser Temperaturbehandlung um mindesten 1000s höher liegt als vorher.

Überraschenderweise weißt die erfindungsgemäße Folie hohe Porositäten, eine sehr gute mechanische Festigkeit als auch die gewünschte Abschaltfunktion auf. Der Gurley Wert der erfindungsgemäßen Folie liegt im allgemeinen in einem Bereich von 50 - 5000s; vorzugsweise 100 bis 2000s, insbesondere 120 bis 800s. Die Gasdurchlässigkeit der Folie wird signifikant reduziert, wenn die Folie einer erhöhten Temperatur ausgesetzt wird. Diese Funktion wird im Sinne der vorliegenden Erfindung als "Abschaltfunktion" bezeichnet. Die Bestimmung erfolgt im Prinzip nach der beschriebenen Methode für die Bestimmung der Gasdurchlässigkeit, in dem diese Messung vor und nach der Temperaturbelastung an der Folie ausgeführt wird. Beispielsweise erhöht sich der Gurley Wert der Folie auf mindesten 5000s, vorzugsweise auf mindestens 8000s, insbesondere auf mindestens 10.000 bis 250.000s nach einer Temperaturbehandlung von fünf Minuten bei 130°C, wobei sich der Gurley Wert bei dieser Temperaturbehandlung um mindesten 1000s, vorzugsweise um 5000 bis 250.000s, insbesondere um 10.000 bis 200.000s erhöht. Der Gurley Wert gibt an (in sec) wie lange es dauert bis eine bestimmte Menge Luft (100 cm³) durch eine definierte Fläche der Folie (1 Inch²) diffundiert. Der Maximalwert kann somit eine unendliche Zeitdauer sein. Daher ist der zweite Gurley-Wert, d.h. der Gurley-Wert nach Temperaturbehandlung, über den man eine Abschaltfunktion beschreibt, ein nach oben offener Bereich. Im Idealfall ist die Membran nach der Temperaturbehandlung komplett dicht und läßt keine Luft mehr hindurch, d.h. der Gurley Wert ist dann unendlich. Der E-Modul der erfindungsgemäßen Folie beträgt in Längsrichtung zweckmäßigerweise > 300 bis 1800 N/mm2, vorzugsweise 400 bis 1500 N/mm2, insbesondere 600 bis 1200 N/mm2 und in Querrichtung zweckmaßigerweise > 500 bis 3000 N/mm2, vorzugsweise 800 bis 2500 N/mm2, insbesondere 1000 bis 2200 N/mm2.

Die mikroporöse Folie kann bei ihrer erfindungsgemäßen Verwendung als Separator in Batterien die Folgen eines Kurzschlusses wirksam verhindern. Treten in Folge eines Kurzschlusses erhöhte Temperaturen im Inneren der Batterie auf, werden die Poren des Separators durch die Abschaltschicht in kurzer Zeit so geschlossen, daß ein weiterer Durchtritt von Gasen bzw. Ionen unterbunden und die Kettenreaktion unterbrochen wird.

Überraschenderweise zeigt die Folie trotz des Zusatzes von Polyethylen in der Abschaltschicht sehr hohe Porositäten. Dies überrascht in zweifacher Hinsicht. Der Anteil von Polyethylen von beispielsweise 20 Gew.-% in der Polymermischung der Abschaltschicht führt zu einem reduzierten Anteil von ß-Kristalliten in der abgekühlten Polymerschmelze der Abschaltschicht und somit auch zu einem reduzierten ß-Kristallit-Gehalt in der Folie. Für Polypropylenfolien ohne Polyethylen-Zusatz gilt, daß die Porosität direkt vom Anteil an ß-Kristalliten abhängt. Je weniger ß-Kristallite die abgekühlte und unverstreckte Polypropylen-Folie enthält, desto geringer ist die Porosität, die sich nach Verstrecken der PP-Folie ausbildet. Überraschenderweise wird jedoch die Porosität der erfindungsgemäßen Folie mit Polyethylen in der Abschaltschicht gegenüber einer analog zusammengesetzten und gleich hergestellten Polypropylenfolie ohne Polyethylen in der Abschaltschicht nicht verschlechtert, obwohl der ß-Kristallit Anteil in der unverstreckten Vorfolie geringer ist. Außerdem wurde erwartet, daß auf Grund der Schicht II der mehrschichtigen Folie, welche nur aus Propylenpolmyeren aufgebaut ist, die Querstrecktemperatur so hoch gewählt werden muss, daß das Polyethylen in der Abschaltschicht auf Grund seines niedrigen Schmelzpunktes bei der Verstreckung in Querrichtung zu einem Verschluß der Poren führt, so daß die gute Porosität auch aus diesem Grund erheblich beeinträchtigt wird. Überraschenderweise ist es möglich die Querstrecktemperatur zur Verstreckung der Polypropylenfolie soweit abzusenken, daß das Polyethylen die Porosität nicht negativ beeinflußt, aber dennoch kann die Folie, die auch eine Polypropylenschicht ohne Polyethylen umfaßt, soweit verstreckt werden kann, daß gute mechanische Festigkeiten erzielt werden. Gleichzeitig wurde gefunden, daß eine Menge an Polyethylen, die ausreicht um einen Abschalteffekt zu bewirken, die Porosität nicht gleichzeitig ruiniert. Es kann somit überraschenderweise eine Folie zur Verfügung gestellt werden, welche hohe Porositäten über die biaxiale Verstreckung von ß-Kristalliten, hohe mechanische Festigkeiten und einen Abschalteffekt aufweist.

Die erfindungsgemäße Folie umfaßt mindestens eine Abschaltschicht I und mindestens eine weitere poröse Schicht II. Alle Schichten der Folie enthalten als Hauptkomponenten ein Propylenhomopolymer und Propylenblockcopolymer und mindestens ein ß-Nukleierungsmittel, sowie gegebenenfalls andere Polyolefine in geringen Mengen, soweit sie die Porosität und andere wesentliche Eigenschaften nicht nachteilig beeinflussen und gegebenenfalls übliche Additive, beispielsweise Stabilisatoren, Neutralisationsmittel in jeweils wirksamen Mengen. Es ist erfindungswesentlich, daß die Abschaltschicht zusätzlich ein Polyethylen enthält. Die poröse Schicht II enthält vorzugsweise kein Polyethylen und keine anderen polyolefinischen Komponenten, die einen Schmelzpunkt von <140°C aufweisen, insbesondere ist diese Schicht II im wesentlichen (>90 Gew.-%) nur aus Propylenpolymeren aufgebaut. Die Komponenten, die sowohl in der Abschaltschicht I als auch in der porösen Schicht II eingesetzt werden (Propylenhomopolymer und Propylenblockcopolymer und ß-Nukleierungsmittel) werden nachstehend im Einzelnen beschrieben.

Geeignete Propylenhomopolymere enthalten 98 bis 100 Gew.-%, vorzugsweise 99 bis 100 Gew.-% Propyleneinheiten und besitzen einen Schmelzpunkt (DSC) von 150°C oder höher, vorzugsweise 155 bis 170°C, und im allgemeinen einen Schmelzflußindex von 0,5 bis 10 g/10 min, vorzugsweise 2 bis 8. g/10 min, bei 230°C und einer Kraft von 2,16 kg (DIN 53735). Isotaktische Propylenhomopolymere mit einem n-heptan löslichen Anteil von unter 15 Gew.-%, vorzugsweise 1 bis 10 Gew.-%, stellen bevorzugte Propylenhomopolymere für die Schicht dar. Vorteilhaft können auch isotaktische Propylenhomopolymere mit einer hohen Kettenisotaktizität von mindestens 96%, vorzugsweise 97 - 99% (¹³C-NMR; Triaden Methode) eingesetzt werden. Diese Rohstoffe sind als HIPP (Hoch isotaktische Polypropylene) oder HCPP (Hoch Kristalline Polypropylene) Polymere im Stand der Technik bekannt und zeichnen sich durch eine hohe Stereoregularität der Polymerketten, höhere Kristallinität und einen höheren Schmelzpunkt aus (im Vergleich zu Propylenpolymeren mit einer ¹³C-NMR-Isotaktizität von 90 bis <96%, die gleichfalls eingesetzt werden können).

Als weitere Komponente enthalten sowohl die Abschaltschicht I als auch die poröse Schicht II jeweils zusätzlich ein Propylen-Blockcopolymer. Derartige Propylen-Blockcopolymere haben einen Schmelzpunkt von über 140 bis 170°C, vorzugsweise von 150 bis 165°C, insbesondere 150 bis 160°C und einen Schmelzebereich der bei über 120°C, vorzugsweise in einem Bereich von 125-140°C beginnt. Der Comonomer-, vorzugsweise Ethylen-Gehalt liegt beispielsweise zwischen 1 und 20 Gew.%, bevorzugt 1 und 10 Gew.-%. Der Schmelzflußindex der Propylen-Blockcopolymere liegt im allgemeinen in einem Bereich von 1 bis 20 g/10min, vorzugsweise 1 bis 10 g/10min.

Gegebenenfalls können sowohl die Abschaltschicht I als auch die poröse Schicht II zusätzlich zu dem Propylenhomopolymeren und Propylenblockcopolymeren andere Polyolefine enthalten, soweit sie die Eigenschaften, insbesondere die Porosität und die mechanischen Festigkeiten und die Abschaltfunktion, nicht negativ beeinflussen. Andere Polyolefine sind beispielsweise statistische Copolymere von Ethylen und Propylen mit einem Ethylengehalt von 20 Gew.-% oder weniger, statistische Copolymere von Propylen mit C₄-C₈-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder andere Polyethylene, wie LDPE, VLDPE, und LLDPE.

Als β-Nukleierungsmittel sind für die beide Schichten I und II grundsätzlich alle bekannten Zusatzstoffe geeignet, welche die Bildung von ß-Kristallen des Polypropylens beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Von Polypropylen sind verschiedene kristalline Phasen bekannt. Beim Abkühlen einer Schmelze bildet sich üblicherweise überwiegend das α-kristalline PP, dessen Schmelzpunkt bei ca. 158 - 162 °C liegt. Durch eine bestimmte Temperaturführung kann beim Abkühlen ein geringer Anteil an ß-kristalliner Phase erzeugt werden, welche gegenüber der monoklinen α-Modifikation mit 140 - 150°C einen deutlich niedrigeren Schmelzpunkt aufweist. Im Stand der Technik sind Additive bekannt, die zu einem erhöhten Anteil der ß-Modifikation beim Abkühlen des Polypropylens führen, beispielsweise γ-Quinacridone, Dihydroquinacridine oder Calciumsalze der Phtalatsäure.

Für die Zwecke der vorliegenden Erfindung werden vorzugsweise hochaktive β-Nukleierungsmittel eingesetzt, welche beim Abkühlen einer Propylenhomo-polymerschmelze (PP-Anteil 100%) einen ß-Anteil von 40-95%, vorzugsweise von 50-85% (DSC) erzeugen. Der ß-Anteil wird aus dem DSC der abgekühlten Propylenhomopolymerschmelze bestimmt. Bevorzugt ist beispielsweise ein zweikomponentiges ß-Nukleierungssystem aus Calciumcarbonat und organischen Dicarbonsäuren, welches in der DE 3610644 beschrieben ist, worauf hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide insbesondere N,N-Dicyclohexyl-2,6-Naphtalendicarboxamide sind geeignete ß-Nukleierungsmittel.

Zusätzlich zu den ß-Nukleierungsmitteln ist die Einhaltung eines bestimmten Temperaturbereiches und Verweilzeiten bei diesen Temperaturen beim Abkühlen des Schmelzefilms für die Erzielung eines hohen Anteils an β-kristallinem Polypropylen wichtig. Die Abkühlung des Schmelzefilms erfolgt vorzugsweise bei einer Temperatur von 60 bis 140°C, insbesondere 80 bis 130°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein, damit die notwendigen Verweilzeiten bei den gewählten Temperaturen ausreichend lange sind. Die Abzugsgeschwindigkeit beträgt vorzugsweise weniger als 25 m/min, insbesondere 1 bis 20 m/min.

Besonders bevorzugte Ausführungsformen der erfindungsgemäßen mikroporösen Folie enthalten 50 bis 10.000ppm, vorzugsweise 50 bis 5000ppm, insbesondere 50 bis 2000ppm Calcium-Pimelat oder Calcium-Suberat als ß-Nukleirungsmittel in jeder Schicht.

Die Abschaltschicht I enthält im allgemeinen 45 bis 75 Gew.-%, vorzugsweise 50 bis 70 Gew.-%, Propylenhomopolymere und 10 - 45 Gew.-% Propylenblockcopolymer, vorzugsweise 20 bis 35 Gew.-%, und 15 bis 45 Gew.-% Polyethylen, vorzugsweise 15 bis 30 Gew.-% und 0,001 bis 5 Gew.-%, vorzugsweise 50-10.000 ppm mindestens eines ß-Nukleierungsmittels, bezogen auf das Gewicht der Abschaltschicht. Für den Fall, daß weitere Polyolefine in der Abschaltschicht enthalten sind, wird der Anteil des Propylenhomopolymeren oder des Blockcopolymeren entsprechend reduziert. Im allgemeinen wird die Menge der zusätzlichen Polymeren in der Abschaltschicht 0 bis <10 Gew.-%, vorzugsweise 0 bis 5 Gew.-%, insbesondere 0,5 bis 2 Gew.-% betragen, wenn diese zusätzlich enthalten sind. In gleicher Weise gilt, daß der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Abschaltschicht übliche Stabilisatoren und Neutralisationsmittel, sowie gegebenenfalls weitere Additive, in den üblichen geringen Mengen von unter 2 Gew.-% enthalten.

Für die Zwecke dieser Erfindung sind als Polyethylene in der Abschaltschicht HDPE oder MDPE bevorzugt. Im allgemeinen sind diese Polyethylene wie HDPE und MDPE mit dem Polypropylen unverträglich und bilden im Gemisch mit Polypropylen eine separate Phase. Das Vorliegen einer separaten Phase zeigt sich beispielsweise in einer DSC Messung durch einen separaten Schmelzepeak im Bereich der Schmelztemperatur des Polyethylens, im allgemeinen in einem Bereich von 115-140°C. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Kristallinität von 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,97 g/cm³. Der Schmelzpunkt, gemessen mit DSC (Maximum der Schmelzkurve, Aufheizgeschwindigkeit 20 °C/min), liegt zwischen 120 und 145°C, vorzugsweise 125 - 140°C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C, vorzugsweise 120 - 125°C.

Zusätzlich ist es erfindungsvorteilhaft, daß das Polyethylen ein engen Schmelzbereich aufweist. Dies bedeutet, daß in einem DSC des Polyethylens der Beginn des Schmelzebereiches und das Ende des Schmelzebereiches maximal 10K, vorzugsweise 3 bis 8K auseinander liegen. Als Beginn des Schmelzebereiches gilt hier der extrapolierter Onset, das Ende des Schmelzebereiches ist entsprechend das extrapolierte Ende der Schmelzkurve (Aufheizgeschwindigkeit 10K/min)

Die Parameter "Schmelzpunkt" und "Schmelzebereich" werden mittels DSC-Messung bestimmt und aus der DSC-Kurve, wie bei den Meßmethoden beschrieben, ermittelt.

Die porösen Schicht II enthält im allgemeinen 50 bis 85 Gew.-%, vorzugsweise 60 bis 75 Gew.-%, Propylenhomopolymere und 15 bis 50 Gew.-% Propylenblockcopolymere, vorzugsweise 25 bis 40 Gew.-%, und 0,001 bis 5 Gew.-%, vorzugsweise 50 - 10.000 ppm mindestens eines ß-Nukleierungsmittels, bezogen auf das Gewicht der Schicht, sowie gegebenenfalls die bereits erwähnten Additive wie Stabilisatoren und Neutralisationsmittel,. Für den Fall, daß weitere Polyolefine in der porösen Schicht II enthalten sind, wird der Anteil des Propylenhomopolymeren oder des Blockcopolymeren entsprechend reduziert. Im allgemeinen wird die Menge der zusätzlichen Polymeren 0 bis <20 Gew.-%, vorzugsweise 0,5 bis 15 Gew.-%, insbesondere 1 bis 10 Gew.-% betragen, wenn diese zusätzlich enthalten sind. In gleicher Weise gilt, daß der besagte Propylenhomopolymer oder Propylenblockcopolymer Anteil reduziert wird, wenn höhere Mengen von bis zu 5 Gew.-% Nukleierungsmittel eingesetzt werden. Zusätzlich kann die Schicht II übliche Stabilisatoren und Neutralisationsmittel, sowie gegebenenfalls weitere Additive, in den üblichen geringen Mengen von unter 2 Gew.-% enthalten. Im allgemeinen enthält die poröse Schicht II kein zusätzliches HDPE und/oder MDPE, um die mechanische Festigkeit dieser Schicht II zu optimieren. Für diese HDPEs und MDPEs gilt jedoch auch, wie für die anderen zusätzlichen Polymeren, daß geringe Menge, die die Folieneigenschaften, insbesondere die Porosität, die Abschaltfunktion und die mechanischen Eigenschaften nicht beeinflussen, möglich sind. Vorzugsweise liegt die Menge an HDPEs und MDPEs in der porösen Schicht II unter 5 Gew.-%, insbesondere im Bereich von 0 - 1 Gew.-%.

Die erfindungsgemäße Zusammensetzung der Folie aus Propylenhomopolymer, Propylenblockcopolymer, β-Nukleierungsmittel und Polyethylen zeigt in der DSC Messung beim zweiten Aufschmelzen ein charakteristisches Muster aus mindestens 3 Peaks. Diese Peaks können der α-kristallinen Phase des Propylenhomopolymers, der ß-kristallinen Phase des Propylenhomopolymers und dem Polyethylen zugeordnet werden. Die erfindungsgemäße Folie weißt somit bei einer DSC Messung einen Peak im Bereich von 115-145°C für das Polyethylen, einen Peak im Bereich von 140 - 155°C für das ß-kristalline Polypropylen und einen dritten Peak von 155 - 175°C für das α-kristalline Polypropylen auf.

Die mikroporöse Membranfolie ist mehrschichtig. Die Dicke der Membranfolie liegt im allgemeinen in einem Bereich von 10 bis 100µm, vorzugsweise 15 bis 80µm. Die mikroporöse Folie kann mit einer Corona, Flamm- oder Plasmabehandlung versehen werden, um die Befüllung mit Elektrolyten zu verbessern. Die Dicke der porösen Schicht II liegt in einem Bereich von 9 µm bis 60µm, vorzugsweise 15 bis 50µm. Die Dicke der Abschaltschicht I liegt in einem Bereich von 1 µm bis 40 µm, vorzugsweise 3 bis 30µm.

Gegebenenfalls kann die mikroporöse Folie weitere poröse Schichten aufweisen, welche analog wie die poröse Schicht II aufgebaut sind, wobei die Zusammensetzung dieser weiteren Schichten und der porösen Schicht II nicht unbedingt identisch sein müssen, aber gleich sein können. Dreischichtige Folien haben vorzugsweise eine innere Abschaltschicht I, die auf beiden Seiten von porösen Schichten II abgedeckt ist.

Die Dichte der mikroporösen Folie liegt im allgemeinen in einem Bereich von 0,1 bis 0,6 g/cm³, vorzugsweise 0,2 bis 0,5 g/cm³. Für die Verwendung der Folie als Separator in Batterien sollte die Folie einen Gurley Wert von 50 bis 5000 s aufweisen, vorzugsweise von 100 bis 2500 s. Der Bubble point der Folie sollte nicht über 350nm, vorzugsweise im Bereich von 50 bis 300nm liegen und der mittlere Porendurchmesser sollte im Bereich 50 bis 100 nm, bevorzugt im Bereich 60 - 80 nm liegen.

Die erfindungsgemäße poröse Folie wird vorzugsweise nach dem an sich bekannten Flachfolien-Coextrusionsverfahren hergestellt. Im Rahmen dieses Verfahrens wird so vorgegangen, daß die Mischungen aus Propylenhomopolymer, Propylenblockcopolymer, β-Nukleierungsmittel der jeweiligen Schicht und Polyethylen für die Abschaltschicht vermischt, in einem Extruder aufgeschmolzen und gemeinsam und gleichzeitig durch eine Flachdüse auf eine Abzugswalze coextrudiert werden, auf der sich der mehrschichtige Schmeizefilm unter Ausbildung der ß-Kristallite verfestigt und abkühlt. Die Abkühltemperaturen und Abkühlzeiten werden so gewählt, daß ein möglichst hoher Anteil an β-kristallinem Polypropylen in der Vorfolie entsteht. Auf Grund des Polyethylen-Anteils in der Abschaltschicht ist der Gehalt an ß-Kristallen gegenüber reinen Polypropylenfolien leicht reduziert. Im allgemeinen beträgt der Anteil an ß-Kristalliten in der Vorfolie 30 - 85%, vorzugsweise 50 - 80%, insbesondere 60 - 70%. Diese Vorfolie mit einem hohen Anteil an β-kristallinem Polypropylen wird anschließend derart biaxial gestreckt, daß es bei der Verstreckung zu einer Umwandlung der ß-Kristallite in α-Polypropylen und zur Ausbildung einer netzwerkartigen porösen Struktur kommt. Die biaxial gestreckte Folie wird abschließend thermofixiert und gegebenenfalls auf einer Oberfläche corona-, plasma- oder flammbehandelt.

Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 135°C, vorzugsweise 100 bis 130°C gehalten, um die Ausbildung eines hohen Anteils an β-kristallinem Polypropylen in beiden Schichten zu fördern.

Bei der Verstreckung in Längsrichtung beträgt die Temperatur weniger als 140°C, vorzugsweise 70 bis 120 °C. Das Längs-Streckverhältnis liegt in einem Bereich von 2:1 bis 5:1, vorzugsweise 3:1 bis 4,5:1. Die Verstreckung in Querrichtung erfolgt bei einer Temperatur von 120 -145°C und sollte so gewählt werden, daß die Querstrecktemperatur nicht wesentlich über dem Schmelzpunkt des Polyethylens liegt. Im allgemeinen kann die Querstrecktemperaur bis zu 5°C, vorzugsweise bis zu 3°C über dem Schmelzpunkt des Polyethylens liegen. Für den Fall, daß die Querstrecktemperatur unter dem Schmelzpunkt des Polyethylens liegt, können die Abweichungen größer sein, beispielsweise bis zu 20°C, vorzugsweise bis zu 10°C betragen. In diesem Fall wird sich die Querstrecktemperatur nach der Verstreckbarkeit des Polypropylenanteils in der Folie richten. Das Querstreckverhältnis liegt in einem Bereich von 2:1 bis 9:1, vorzugsweise 3:1 - 8:1.

Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich im allgemeinen ihre Thermofixierung (Wärmebehandlung) an, wobei die Folie etwa 0,5 bis 500s, vorzugsweise 10 bis 300s lang bei einer Temperatur von 110 bis 140°C ausgesetzt wird, beispielsweise über Walzen oder einen Luftheizkasten. Die Temperatur bei der Thermofixierung sollte so eingestellt werden, daß die Temperatur, die die Folie beim Durchlaufen des Fixierfeldes erreicht, unter dem Schmelzpunkt des Polyethylens oder maximal 1 bis 2°C darüber liegt. Anschließend wird die Folie in üblicher Weise mit einer Aufwickeleinrichtung aufgewickelt.

Gegebenenfalls wird, wie oben erwähnt, nach der biaxialen Streckung eine Oberfläche der Folie nach einer der bekannten Methoden corona-, plasma- oder flammbehandelt.

Zur Charakterisierung der Rohstoffe und der Folien wurden die folgenden Meßmethoden benutzt:

### Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

### Schmelzpunkte und Schmelzebereichs

Teilkristalline thermoplastische Polymere wie beispielsweise Propylenpolymere besitzen auf Grund der unterschiedlichen kristallinen Bereiche oder Phasen keinen festen Schmelzpunkt, sondern einen Schmelzebereich. Schmelzpunkt und Schmelzbereich sind daher Werte, die in einer genau definierten Weise aus einer DSC Kurve des jeweiligen Polymeren abgeleitet werden. Bei der DSC Messung wird dem Polymeren mit einer definierten Aufheizrate eine Wärmemenge pro Zeiteinheit zugeführt und der Wärmestrom gegen die Temperatur aufgetragen, d.h. die Änderung der Enthalpie als abweichender Verlauf des Wärmestroms von der Basislinie gemessen. Unter der Basislinie versteht man den (linearen) Teil der Kurve in dem keine Phasen-Umwandlungen stattfinden. Hier gilt ein linearer Zusammenhang zwischen der zugeführten Wärmemenge und der Temperatur. In dem Bereich in dem Schmelzevorgänge stattfinden erhöht sich der Wärmestrom um die notwendige Schmelzenergie und die DSC Kurve steigt an. In dem Bereich in dem die meisten Kristallite schmelzen durchläuft die Kurve ein Maximum und fällt, nach dem alle Kristallite aufgeschmolzen sind, wieder auf die Basislinie ab. Der Schmelzpunkt ist im Sinne der vorliegenden Efindung das Maximum der DSC Kurve. Der Beginn des Schmelzebereichs ist im Sinne der vorliegenden Erfindung diejenige Temperatur bei der die DSC Kurve von der Basislinie abweicht und der Anstieg der DSC Kurve beginnt. Entsprechend ist das Ende des Schmelzebereiches diejenige Temperatur bei der die DSC Kurve wieder auf die Basislinie abgefallen ist. Die Temperaturdifferenz zwischen dem Beginn und dem Ende ist der Schmelzebereich.

Zur Bestimmung des Schmelzpunkts und des Schmelzebereichs wird die Probe ein erstes Mal mit einer Aufheiz- und Abkühlgeschwindigkeit von 10K/1min im Bereich von 20 bis 200°C geschmolzen und wieder abgekühlt. Anschließend wird wie üblich unter den gleichen Bedingungen eine zweite DSC Kurve aufgenommen (20-200°C und 10K/1min) und diese zweite Aufheizkurve wie beschrieben ausgewertet.

### ß-Gehalt der Vorfolie

Die Bestimmung des ß-Gehaltes der Vorfolie erfolgt ebenfalls über eine DSC-Messung, die an der Vorfolie folgendermaßen durchgeführt wird: Die Vorfolie wird in der DSC zunächst mit einer Aufheizrate von 10K/min auf 220°C erhitzt und aufgeschmolzen und wieder abgekühlt Aus der 1.Aufheizkurve wird der Kristallinitätsgrad K_{ß,DSC} als Verhältnis der Schmelzenthalpien der ß-kristallinen Phase (H_{ß}) zu der Summe der Schmelzenthalpien von ß- und α-kristalliner Phase (H_{β} + H_{α}) bestimmt.

### Dichte

Die Dichte wird nach DIN 53 479, Verfahren A, bestimmt.

### Permeabilität (Gurley-Wert)

Die Permeabilität der Folien wurde mit dem Gurley Tester 4110, nach ASTM D 726-58 gemessen. Dabei wird die Zeit (in sec) bestimmt die 100 cm³ Luft benötigen, um durch die Etikettenfläche von 1 Inch² (6,452 cm²) zu permeieren. Die Druckdifferenz über der Folie entspricht dabei dem Druck einer Wassersäule von 12,4 cm Höhe. Die benötigte Zeit entspricht dann dem Gurley-Wert.

### Abschaltfunktion

Die Abschaltfunktion wird durch Gurleymessungen vor und nach einer Temperaturbehandlung bei einer Temperatur von 130°C bestimmt. Der Gurley Wert der Folie wird wie vorstehend beschrieben gemessen. Anschließend wird die Folie fünf Minuten lang im Wärmeofen der Temperatur von 130°C ausgesetzt. Anschließend wird der Gurley Wert wie beschrieben erneut ermittelt. Die Abschaltfunktion ist gegeben, wenn die Folie nach der Temperaturbehandlung einen Gurley Wert von mindestens 5000 aufweist und sich um mindestens 1000s erhöht hat.

Die Erfindung wird nunmehr durch die nachfolgenden Beispiele erläutert.

### Beispiel 1

Nach dem Coextrusionsverfahren wurde aus einer Breitschlitzdüse bei einer Extrusionstemperatur von jeweils 240 bis 250°C °C eine zweischichtige Vorfolie (Poröse Schicht II und Abschaltschicht I) coextrudiert. Diese Vorfolie wurde zunächst auf einer Kühlwalze abgezogen und abgekühlt. Anschließend wurde die Vorfolie in Längs- und Querrichtung orientiert und abschließend fixiert. Die Folie hatte die folgende Zusammensetzung:

### Abschaltschicht I:

ca. 60 Gew.-% hochisotaktisches Propylenhomopolymerisat (PP) mit einer ¹³C-NMR Isotaktizität von 97% und einem n-heptanlöslichen Anteil von 2,5 Gew.-% (bezogen auf 100 % PP) und einem Schmelzpunkt von 165°C; und einem Schmelzflußindex von 2,5 g/10 min bei 230 °C und 2,16 kg Belastung (DIN 53 735) und
ca. 20 Gew.-%: HDPE (High Density Polyethylen) mit einer Dichte von 0,954 (ISO 1183) und einem MFI von 0,4 g/10 min bei 190 °C und 2,16 kg Belastung (ISO 1133/D) bzw. 27 g/10 min bei 190 °C und 21,6 kg Belastung (ISO 1333/G) und Schmelzpunkt von 130°C (DSC: Peak bei 10K/min Heizrate), der Schmelzebereich beginnt bei 126°C und endet bei 133°C.
ca. 20 Gew.-%: Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und 0,04 Gew.-%: Ca-Pimelat als ß-Nukleierungsmittel.

### Poröse Schicht II:

ca. 80 Gew.-% hochisotaktisches Propylenhomopolymerisat (PP) mit einer ¹³C-NMR Isotaktizität von 97% und einem n-heptanlöslichen Anteil von 2,5 Gew.-% (bezogen auf 100% PP) und einem Schmelzpunkt von 165°C; und einem Schmelzflußindex von 2,5 g/10 min bei 230 °C und 2,16 kg Belastung (DIN 53 735) und
ca. 20 Gew.-% Propylen-Ethylen-Blockcopolymerisat mit einem Ethylenanteil von 5 Gew.-% bezogen auf das Blockcopolymer und einem MFI (230°C und 2,16 kg) von 6 g/10min und einem Schmelzpunkt (DSC) von 165°C eingesetzt und
0,04 Gew.-% Ca-Pimelat als ß-Nukleierungsmittel.

Die Folie enthielt zusätzlich in beiden Schichten Stabilisator und Neutralisationsmittel in üblichen geringen Mengen.

Im einzelnen wurde die folgenden Bedingungen und Temperaturen bei der Herstellung der Folie gewählt:

| | |
|---|---|
| Extrusion: | Extrusionstemperatur 235 °C |
| Abzugswalze: | Temperatur 125°C, |
| Abzugsgeschwindigkeit: | 4m/min |
| Längsstreckung: | Streckwalze T = 90 °C |
| Längsstreckung um den | Faktor 3.0 |
| Querstreckung: | Aufheizfelder T = 125 °C |
| Streckfelder | T=125°C |
| Querstreckung um den | Faktor 5.0 |
| Fixierung: | T=125°C |

Die so hergestellte poröse Folie war ca. 25 µm dick, wobei die Abschaltschicht 12 µm der Gesamtdicke ausmachte. Die Folie wies eine Dichte von 0,38 g/cm³ auf und zeigte ein gleichmäßiges weiß-opakes Aussehen.

### Beispiel 2

Es wurde eine zweischichtige Folie wie in Beispiel 1 beschrieben hergestellt. Im Unterschied zu Beispiel 1 wurde in der Abschaltschicht der Anteil an Propylenhomopolymer auf 55 Gew.-% erniedrigt und der Anteil an HDPE auf 25 Gew.-% erhöht. Die Zusammensetzung der porösen Schicht II sowie die Verfahrensbedingungen wurden nicht geändert. Die so hergestellte poröse Folie war ca. 28 µm dick, wobei jede Schicht 14 µm dick waren. Die Folie wies eine Dichte von 0,42 g/cm³ auf und zeigte ein weiß-opakes Aussehen.

### Beispiel 3

Es wurde eine zweischichtige Folie wie in Beispiel 1 beschrieben hergestellt. Im Unterschied zu Beispiel 1 wurde in der Abschaltschicht der Anteil an Propylenhomopolymer auf 40 Gew.-% erniedrigt und der Anteil an HDPE auf 40 Gew.-% erhöht. Die übrige Zusammensetzung der porösen Schicht II sowie die Verfahrensbedingungen wurden nicht geändert. Die so hergestellte Folie war 30µm dick, wobei jede Schicht ca. 15 µm der Foliendicke ausmachten. Die Folie wies eine Dichte von 0,42 g/cm³ auf und zeigte eingleichmäßiges weiß-opakes Aussehen.

### Beispiel 4

Es wurde eine zweischichtige Folie wie in Beispiel 1 beschrieben hergestellt, Im Unterschied zu Beispiel 1 wurde in der Abschaltschicht das HDPE durch ein MDPE mit einer Dichte von 0,954g/cm³ (ISO 1183) und einem MFI von 0,4 g/10 min bei 190 °C und 2,16 kg Belastung (ISO 1133/D) bzw. 27 g/10 min bei 190 °C und 21,6 kg Belastung (ISO 1333/G) und einem Schmelzpunkt von 125°C (DSC: Peak bei 10 "C/min Heizrate) ersetzt. Der Schmelzebereich des MDPEs liegt zwischen 120 - 127°C. Des weiteren wurde die Querstrecktemperatur im Vergleich zu Beispiel 1 auf 120 °C reduziert. Die übrige Zusammensetzung der porösen Schicht II sowie die alle anderen Verfahrensbedingungen wurden nicht geändert. Die verstreckte Folie ist 30µm dick, wobei jede Schicht ca. 15 µm der Foliendicke ausmachen. Die Folie wies eine Dichte von 0,42 g/cm³ auf und zeigte ein gleichmäßiges weiß-opakes Aussehen.

### Vergleichsbeispiel 1

Es wurde eine Folie wie in Beispiel 1 beschrieben hergestellt. Im Unterschied zu Beispiel 1 wies die Folie keine Abschaltschicht auf und umfaßte nur die poröse Schicht **II**, deren Dicke entsprechend erhöht wurde. Die Folie wurde somit als einschichtige Folie hergestellt. Die Zusammensetzung der porösen Schicht II sowie die Verfahrensbedingungen wurden nicht geändert. Die Folie hat ein weiß-opakes Aussehen, eine Dicke von 25 µm und eine Dichte von 0,38 g/cm³.

### Beispiel 5

Es wurde eine Folie wie in Beispiel 1 beschrieben hergestellt. Die Zusammensetzung der Folie wurde nicht geändert. Im Unterschied zu Beispiel 1 wurde die Folie jetzt bei einer Temperatur von 135°C querverstreckt. Die so hergestellte poröse Folie war ca. 25 µm dick und wies eine Dichte von 0,38 g/cm³ auf und zeigte ein weiß-opakes Aussehen.

**Tabelle**

| Beispiel | Gurley Wert [s] | Gurley Wert nach Temperatur-behandlung (5min@ 130°C) [s] | E-modul in MD/TD [N/mm²] |
|---|---|---|---|
| Bsp.: 1 | 350 | 9.000 | 1020/2100 |
| Bsp.: 2 | 350 | 10.000 | 1000/1850 |
| Bsp.: 3 | 600 | 100.000 | 900/1400 |
| Bsp.: 4 | 800 | 45.000 | 1010/2050 |
| VB 1 | 400 | 600 | 1080/1260 |
| Bsp.: 5 | 4600 | 18.500 | 1120/2120 |

## Patentansprüche

1. Biaxial orientierte, mehrschichtige mikroporöse Folie mit Abschaltfunktion, deren Mikroporosität durch Umwandlung von ß-kristallinem Polypropylen beim Verstrecken der Folie erzeugt wird, welche mindestens eine Abschaltschicht I und mindestens eine Schicht II umfaßt, wobei die Abschaltschicht Propylenhomopolymer und Propylen-Blockcopolymer und ß-Nukleierungsmittel und Polyethylen enthält, wobei die Folie einen Gurley Wert von 50 bis 5000s, einen E-Modul in Längsrichtung von >300 N/mm² und in Querrichtung von >500 N/mm² aufweist und die Folie, nach dem sie fünf Minuten einer Temperatur von 130°C ausgesetzt wurde, einen Gurley Wert von mindestens 5000s aufweist, wobei der Gurley Wert nach dieser Temperaturbehandlung um mindesten 1000s höher liegt als vorher, **dadurch gekennzeichnet, daß** die Schicht II porös ist und die Schicht II Propylenhomopolymer und Propylen-Blockcopolymer und β-Nukleierungsmittel enthält.

2. Folie nach Anspruch 1, **dadurch gekennzeichnet, daß** das Polyethylen der Abschaltschicht I einen Schmelzpunkt von 115 - 140°C aufweist.

3. Folie nach Anspruch 1 oder 2, **dadurch gekennzeichnet, daß** der Schmelzbereich des Polyethylens der Abschaltschicht I eine Breite von maximal 10K aufweist.

4. Folie nach einem der Ansprüche 1 bis 3, **dadurch gekennzeichnet, daß** das Polyethylen der Abschaltschicht I ein HDPE oder ein MDPE ist.

5. Folie nach einem der Ansprüche 1 bis 4, **dadurch gekennzeichnet, daß** die Abschaltschicht I 15 - 45 Gew.-% Polyethylen bezogen auf das Gewicht der Abschaltschicht I enthält.

6. Folie nach einem der Ansprüche 1 bis 5, **dadurch gekennzeichnet, daß** die Abschaltschicht I 45 bis 75 Gew.-% Propylenhomopolymer, 10 bis 45 Gew.-% Propylen-Blockcopolymer und 50 bis 10:000ppm β-Nukleierungsmittel enthält.

7. Folie nach einem der Ansprüche 1 bis 6, **dadurch gekennzeichnet, daß** das Propylenhomopolymere ein hochisotaktisches Polypropylen mit einer Kettenisotaxie (¹³C-NMR) von 96 bis 99% ist.

8. Folie nach einem der Ansprüche 1 bis 6, **dadurch gekennzeichnet, daß** das Propylenhomopolymere ein isotaktisches Polypropylen mit einer Kettenisotaxie (¹³C-NMR) von 90 bis <96% ist.

9. Folie nach einem der Ansprüche 1 bis 8, **dadurch gekennzeichnet, daß** das Nukleiierungsmittel ein Calciumsalz der Pimelinsäure oder der Suberinsäure oder ein Carboxamid ist.

10. Folie nach einem der Ansprüche 1 bis 9, **dadurch gekennzeichnet, daß** die poröse Schicht II 50 bis 85 Gew.-% Propylenhomopolymer, 15 bis 50 Gew.-% Propylen-Blockcopolymer und 50 bis 10.00ppm β-Nukleierungsmittel enthält.

11. Folie nach einem der Ansprüche 1 bis 10, **dadurch gekennzeichnet, daß** die poröse Schicht II 0 - 5 Gew.-% HDPE und/oder MDPE enthält.

12. Folie nach einem der Ansprüche 1 bis 11, **dadurch gekennzeichnet, daß** die Folie eine weitere poröse Schicht umfaßt, die Propylenhomopolymer und Propylen-Blockcopolymer und β-Nukleierungsmittel enthält

13. Folie nach einem der Ansprüche 1 bis 12, **dadurch gekennzeichnet, daß** die Dichte der Folie in einem Bereich 0,1 bis 0,6 g/cm³ liegt.

14. Folie nach einem der Ansprüche 1 bis 13, **dadurch gekennzeichnet, daß** die Folie einen Gurley Wert von 50 bis 5000 s aufweist und nach dem sie 5 Minuten einer Temperatur von 130°C ausgesetzt wurde, einen Gurley Wert von mindestens 8000s aufweist.

15. Folie nach einem der Ansprüche 1 bis 14, **dadurch gekennzeichnet, daß** das die Folie eine Dicke von 10 bis 100µm aufweist.

16. Verfahren zur Herstellung einer Folie nach einem oder mehreren der Ansprüche 1 bis 15, **dadurch gekennzeichnet, daß** die Folie nach dem Flachfolienverfahren hergestellt ist und die Abzugswalzentemperatur in einem Bereich von 60 bis 130 °C liegt.

17. Verfahren nach Anspruch 16, **dadurch gekennzeichnet, daß** die unverstreckte Vorfolie einen Gehalt an ß-Kristalliten von 30 bis 85% aufweist.

18. Verfahren nach Anspruch 16 oder 17, **dadurch gekennzeichnet, daß** die Folie bei einer Temperatur in Querrichtung verstreckt wird, die maximal 2°C über dem Schmelzpunkt des Polyethylens liegt.

19. Verwendung einer Folie nach einem der Ansprüche 1 bis 15 als Separator in Batterien oder Akkumulatoren.

## Claims

1. Biaxially oriented, multilayer, microporous foil with shut-off function, the microporosity of which is created by converting β-crystalline polypropylene when the foil is stretched, and which comprises at least one shut-off layer I and at least one layer II, wherein the shut-off layer contains propylene homopolymer and propylene block copolymer and β-nucleating agent and polyethylene, wherein the foil has a Gurley value from 50 to 5000 s, an e-modulus in the lengthwise direction >300 N/mm² and > 500 N/mm² in the transverse direction, and after exposure to a temperature of 130°C for 5 minutes the foil exhibits a Gurley value of at least 5000s, wherein the Gurley value after this temperature treatment is at least 1000s higher than before, **characterized in that** layer II is porous and layer II contains propylene homopolymer and propylene block copolymer and β-nucleating agent.

2. The foil according to claim 1, **characterized in that** the polyethylene of the shut-off layer I has a melting point from 115 - 140°C.

3. The foil according to either of claims 1 or 2, **characterized in that** the melting range of the polyethylene of shut-off layer I has a maximum width of 10 K.

4. The foil according to any one of claims 1 to 3, **characterized in that** the polyethylene in the shut-off layer I is an HDPE or MDPE.

5. The foil according to any one of claims 1 to 4, **characterized in that** the shut-off layer I contains 15 - 45% by weight polyethylene relative to the weight of the shut-off layer I.

6. The foil according to any one of claims 1 to 5, the shut-off layer I contains 45 to 75% by weight propylene homopolymer, 10 to 45% by weight propylene block copolymer and 50 to 10,000 ppm β-nucleating agent.

7. The foil according to any one of claims 1 to 6, **characterized in that** the propylene homopolymer is a high isotactic polypropylene having a chain isotaxy (¹³C-NMR) of 96 to 99%.

8. The foil according to any one of claims 1 to 6, **characterized in that** the propylene homopolymer is an isotactic polypropylene having a chain isotaxy (¹³C-NMR) of 90 to <96%.

9. The foil according to any one of claims 1 to 8, **characterized in that** the nucleating agent is a calcium salt of pimelic acid or of suberic acid or is a carboxamide.

10. The foil according to any one of claims 1 to 9, **characterized in that** the porous layer II contains 50 to 85% by weight propylene homopolymer, 15 to 50% by weight propylene block copolymer, and 50 to 10,000 ppm β-nucleating agent.

11. The foil according to any one of claims 1 to 10, **characterized in that** the porous layer II contains 0 to 5% by weight HDPE and/or MDPE.

12. The foil according to any one of claims 1 to 11, **characterized in that** the foil comprises a further porous layer that contains propylene homopolymer and propylene block copolymer and β-nucleating agent.

13. The foil according to any one of claims 1 to 12, **characterized in that** the density of the foil is in a range from 0.1 to 0.6 g/cm³.

14. The foil according to any one of claims 1 to 13, **characterized in that** the foil has a Gurley value of 50 to 5000 s and has a Gurley value of at least 8000 s after it has been exposed to a temperature of 130°C for 5 minutes.

15. The foil according to any one of claims 1 to 14, **characterized in that** the foil has a thickness from 10 to 100 µm.

16. A method for producing a foil according to one or more of claims 1 to 15, **characterized in that** the foil is produced according to the flat film process and the take-off roller temperature is in a range from 60 to 130°C.

17. The method according to claim 16, **characterized in that** the unstretched prefilm has a β-crystallite content of 30 to 85%.

18. The method according to either of claims 16 or 17, **characterized in that** the foil is stretched transversely at a temperature not more than 2°C higher than the melting point of the polyethylene.

19. Use of a foil according to any one of claims 1 to 15 as a separator in batteries or rechargeable batteries.

## Revendications

1. Feuille microporeuse multicouche qui est biaxialement orientée et pourvue d'une fonction d'arrêt, sa microporosité résultant de la conversion de polypropylène β-cristallin lors de l'orientation de ladite feuille, laquelle comporte au moins une couche d'arrêt I et au moins une couche II, ladite couche d'arrêt contenant de l'homopolymère de propylène et du copolymère de propylène à blocs et de l'agent de nucléation β et du polyéthylène, ladite feuille ayant un indice de Gurley compris entre 50 et 5 000 s, un module d'élasticité > 300 N/mm² dans le sens longitudinal et > 500 N/mm² dans le sens transversal, et ladite feuille présentant un indice de Gurley d'au moins 5 000 s après avoir été exposée pendant cinq minutes à une température de 130 °C, l'indice de Gurley augmentant suite à ce traitement thermique d'au moins 1 000 s par rapport aux valeurs antérieures, caractérisée en que la couche II est poreuse et la couche II contient de l'homopolymère de propylène et du copolymère de propylène à blocs et de l'agent de nucléation β.

2. Feuille selon la revendication 1, **caractérisée en ce que** le polyéthylène de la couche d'arrêt I présente un point de fusion compris entre 115 et 140 °C.

3. Feuille selon la revendication 1 ou 2, **caractérisée en ce que** la plage de fusion du polyéthylène de la couche d'arrêt I présente une largeur inférieure ou égale à 10 K.

4. Feuille selon l'une des revendications 1 à 3, **caractérisée en ce que** le polyéthylène de la couche d'arrêt I est un PE-HD ou un PE-MD.

5. Feuille selon l'une des revendications 1 à 4, **caractérisée en ce que** la couche d'arrêt I contient 15 à 45 % en poids de polyéthylène, par rapport au poids de la couche d'arrêt I.

6. Feuille selon l'une des revendications 1 à 5, **caractérisée en ce que** la couche d'arrêt I contient 45 à 75 % en poids d'homopolymère de propylène, 10 à 45 % en poids de copolymère de propylène à blocs et 50 à 10 000 ppm d'agent de nucléation β.

7. Feuille selon l'une des revendications 1 à 6, **caractérisée en ce que** ledit homopolymère de propylène est un polypropylène hautement isotactique, l'indice d'isotacticité de sa chaîne (¹³C-NMR) étant compris entre 96 et 99 %.

8. Feuille selon l'une des revendications 1 à 6, **caractérisée en ce que** ledit homopolymère de propylène est un polypropylène isotactique, l'indice d'isotacticité de sa chaîne (¹³C-NMR) étant compris entre 90 et < 96 %.

9. Feuille selon l'une des revendications 1 à 8, **caractérisée en ce que** ledit agent de nucléation est un sel de calcium de l'acide pimélique ou de l'acide subérique ou bien un amide d'acide carboxylique.

10. Feuille selon l'une des revendications 1 à 9, **caractérisée en ce que** la couche poreuse II contient 50 à 85 % en poids d'homopolymère de propylène, 15 à 50 % en poids de copolymère de propylène à blocs et 50 à 10 000 ppm d'agent de nucléation β.

11. Feuille selon l'une des revendications 1 à 10, **caractérisée en ce que** la couche poreuse II contient 0 à 5 % en poids de PE-HD et/ou PE-MD.

12. Feuille selon l'une des revendications 1 à 11, **caractérisée en ce que** ladite feuille comprend une autre couche poreuse contenant de l'homopolymère de propylène et du copolymère de propylène à blocs et de l'agent de nucléation β.

13. Feuille selon l'une des revendications 1 à 12, **caractérisée en ce que** la densité de ladite feuille est comprise entre 0,1 et 0,6 g/cm³.

14. Feuille selon l'une des revendications 1 à 13, **caractérisée en ce que** ladite feuille présente un indice de Gurley compris entre 50 et 5 000 s et qu'elle présente, après avoir été exposée pendant 5 minutes à une température de 130 °C, un indice de Gurley d'au moins 8 000 s.

15. Feuille selon l'une des revendications 1 à 14, **caractérisée en ce que** ladite feuille présente une épaisseur comprise entre 10 et 100 µm.

16. Procédé de fabrication d'une feuille selon une ou plusieurs des revendications 1 à 15, **caractérisé en ce que** ladite feuille est fabriquée selon le procédé à filière plate et la température des cylindres d'appel est comprise entre 60 et 130 °C.

17. Procédé selon la revendication 16, **caractérisé en ce que** le précurseur de feuille présente, avant de subir l'orientation, une teneur en cristallites β comprise entre 30 et 85 %.

18. Procédé selon les revendications 16 ou 17, **caractérisé en ce que** ladite feuille est orientée dans le sens transversal à une température ne dépassant pas le point de fusion du polyéthylène de plus de 2 °C.

19. Utilisation d'une feuille selon l'une des revendications 1 à 15 en tant que séparateur dans des batteries ou accumulateurs.
